(19) Europäisches Patentamt
European Patent Office
Office européen des brevets

(11) Veröffentlichungsnummer : **0 355 315 B1**

# (12) EUROPÄISCHE PATENTSCHRIFT

(45) Veröffentlichungstag der Patentschrift :
**19.08.92 Patentblatt 92/34**

(21) Anmeldenummer : **89111535.4**

(22) Anmeldetag : **24.06.89**

(51) Int. Cl.$^5$ : **C08L 77/00,** // (C08L77/00, 77:00, 51:04, 23:00, C08K9:08)

## (54) Thermoplastische Formmassen auf der Basis von Polyamidmischungen.

(30) Priorität : **14.07.88 DE 3823803**

(43) Veröffentlichungstag der Anmeldung :
**28.02.90 Patentblatt 90/09**

(45) Bekanntmachung des Hinweises auf die Patenterteilung :
**19.08.92 Patentblatt 92/34**

(84) Benannte Vertragsstaaten :
**BE DE FR GB NL**

(56) Entgegenhaltungen :
**EP-A- 0 065 278**
**EP-A- 0 291 796**
**FR-A- 2 291 252**
**FR-A- 2 343 018**

(73) Patentinhaber : **BASF Aktiengesellschaft**
**Carl-Bosch-Strasse 38**
**W-6700 Ludwigshafen (DE)**

(72) Erfinder : **Koch, Eckhard Michael, Dr.**
**Merowingerstrasse 8**
**W-6701 Fussgoenheim (DE)**
Erfinder : **Heinz, Gerhard, Dr.**
**Im Vogelsang 2**
**W-6719 Weisenheim (DE)**
Erfinder : **Goetz, Walter, Dr.**
**Dhauner Strasse 79**
**W-6700 Ludwigshafen (DE)**
Erfinder : **Pipper, Gunter**
**Schlangenthaler Weg 10**
**W-6702 Bad Duerkheim (DE)**

EP 0 355 315 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft thermoplastische Formmassen, enthaltend als wesentliche Komponenten

A) 20 - 98 Gew.% eines teilaromatischen Copolyamids, aufgebaut aus

$a_1$) 40 - 90 Gew.% Einheiten, die sich von Terephthalsäure und Hexamethylendiamin ableiten, wobei nicht mehr als 10 Gew.% der Terephthalsäure durch andere aromatische Dicarbonsäuren ersetzt werden können,

$a_2$) 0 - 50 Gew.% Einheiten, die sich von ε-Caprolactam ableiten, und

$a_3$) 0 - 60 Gew.% Einheiten, die sich von Adipinsäure und Hexamethylendiamin ableiten,

wobei die Komponente $a_2$) und/oder $a_3$) insgesamt mindestens 10 Gew.% der Gesamteinheiten ausmachen, und die Komponente A) nicht mehr als 15 Gew.% weiterer Polyamidbausteine enthält,

B) 2 - 80 Gew.% eines von A) verschiedenen teilkristallinen thermoplastischen Polyamids,

sowie darüber hinaus

C) 0 - 50 Gew.% eines schlagzäh modifizierenden Elastomeren

D) 0 - 60 Gew.% faser- oder teilchenförmige Füllstoffe oder deren Mischungen.

Darüber hinaus betrifft die Erfindung die Verwendung derartiger thermoplastischer Formmassen zur Herstellung von Fasern, Folien und Formkörpern und die aus den thermoplastischen Formmassen erhältlichen Formkörper.

Polyamide wie Poly-ε-Caprolactam und Polyhexamethylenadipinsäureamid zählen zu den seit langem bekannten technischen Kunststoffen und haben auf vielen Gebieten Anwendung gefunden. Sie zeichnen sich im allgemeinen durch eine große Härte und Steifigkeit und eine gute Wärmeformbeständigkeit aus, sind darüber hinaus widerstandsfähig gegen Abrieb und Verschleiß und auch beständig gegen viele Chemikalien.

Für einige Einsatzzwecke wäre es jedoch wünschenswert, wenn die Wärmeformbeständigkeit der Polyamide weiter verbessert werden könnte, ohne die verbleibender mechanischen Eigenschaften zu beeinträchtigen.

Diese Anforderungen werden von einigen Copolyamiden erfüllt, in denen ein Teil der aliphatischen Einheiten durch aromatische Einheiten ersetzt sind, z.B. Copolyamide aus Adipinsäure, Terephthalsäure, Hexamethylendiamin und ε-Caprolactam in beliebiger Kombination.

Verfahren zur Herstellung solcher Polyamide sind z.B. in der DE-PS 929 151, der GB-A-1 114 541, der DE-A-16 20 997 und der DE-A 34 07 492 und der älteren Patentanmeldung EP-A 299 444 beschrieben.

Derartige teilaromatische Copolyamide sind jedoch hinsichtlich ihrer Steifigkeit häufig verbesserungsbedürftig.

In der EP 34 704 werden Mischungen aus Poly-ε-caprolactam und Polyhexamethylenadipinsäureamid beschrieben, die gegenüber den beiden Polyamiden selbst bei der Schlagzähmodifizierung gewisse Vorteile mit sich bringen, die jedoch von der Wärmeformbeständigkeit her noch verbesserungsbedürftig sind.

Gleiches gilt für die nach der EP-A 124 451 erhaltenen schlagzähmodifizierten Mischungen aus Poly-ε-caprolactam und Polyhexamethylenadipinsäureamid, die nach einem speziellen Verfahren hergestellt werden.

Der vorliegenden Erfindung lag daher die Aufgabe zugrunde, thermoplastische Formmassen auf der Basis von teilkristallinen Polyamiden zur Verfügung zu stellen, die sich neben einer guten Wärmeformbeständigkeit durch eine gute Steifigkeit und insgesamt ein gutes Eigenschaftsniveau auszeichnen.

Erfindungsgemäß wird diese Aufgabe gelöst durch thermoplastische Formmasen, enthaltend als wesentliche Komponenten

A) 20 - 98 Gew.% eines teilaromatischen Copolyamids, aufgebaut aus

$a_1$) 40 - 90 Gew.% Einheiten, die sich von Terephthalsäure und Hexamethylendiamin ableiten, wobei nicht mehr als 10 Gew % der Terephthalsäure durch andere aromatische Dicarbonsäuren ersetzt werden können,

$a_2$) 0 - 50 Gew.% Einheiten, die sich von ε-Caprolactam ableiten und

$a_3$) 0 - 60 Gew.% Einheiten, die sich von Adipinsäure und Hexamethylendiamin ableiten,

wobei die Komponente $a_2$) und/oder $a_3$) insgesamt mindestens 10 Gew.% der Gesamteinheiten ausmachen, und die Komponente A) nicht mehr als 15 Gew.% weiterer Polyamidbausteine enthält,

B) 2 - 80 Gew.% eines von A) verschiedenen teilkristallinen thermoplastischen Polyamids,

sowie darüber hinaus

C) 0 - 50 Gew.% eines schlagzäh modifizierenden Elastomeren

D) 0 - 60 Gew.% faser- oder teilchenförmiger Füllstoffe oder deren Mischungen.

Bevorzugte Massen dieser Art sind nachstehend näher erläutert.

Als Komponente A) enthalten die erfindungsgemäßen thermoplastischen Formmassen 20 - 98, vorzugsweise 50 - 95 und insbesondere 60 - 90 Gew.% eines teilaromatischen Copolyamids mit dem im folgenden beschriebenen Aufbau.

Die teilaromatischen Copolyamide A) enthalten als Komponente $a_1$) 40 - 90 Gew.% Einheiten, die sich von Terephthalsäure und Hexamethylendiamin ableiten. Ein geringer Anteil der Terephthalsäure, vorzugsweise nicht mehr als 10 Gew.% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von ε-Caprolactam ableiten ($a_2$) und/oder Einheiten, die sich von Adipinsäure und Hexamethylendiamin ($a_3$) ableiten.

Der Anteil an Einheiten die sich von ε-Caprolactam ableiten, beträgt maximal 50 Gew.%, vorzugsweise 20 - 50 Gew.%, insbesondere 25 - 40 Gew.%, während der Anteil an Einheiten die sich von Adipinsäure und Hexamethylendiamin ableiten, bis zu 60 Gew.%, vorzugsweise 30 - 60 Gew.% und insbesondere 35 - 55 Gew.% beträgt.

Die Copolyamide können auch sowohl Einheiten von ε-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.% beträgt, vorzugsweise mindestens 20 Gew.%. Das Verhältnis der Einheiten, die sich von ε-Caprolactam und von Adipinsäure und Hexamethylendiamin ableiten, unterliegt dabei keiner besonderen Beschränkung.

Bevorzugt werden Copolyamide, deren Zusammensetzung im Dreistoffdiagramm innerhalb des durch Eckpunkte $X_1$ bis $X_5$ festgelegten Fünfecks liegt, wobei die Punkte $X_1$ bis $X_5$ folgendermaßen definiert sind:

| | |
|---|---|
| $X_1$ | 40 Gew.% Einheiten $a_1$) |
| | 60 Gew.% Einheiten $a_3$) |
| $X_2$ | 60 Gew.% Einheiten $a_1$) |
| | 40 Gew.% Einheiten $a_3$) |
| $X_3$ | 80 Gew.% Einheiten $a_1$) |
| | 5 Gew.% Einheiten $a_2$) |
| | 15 Gew.% Einheiten $a_3$) |
| $X_4$ | 80 Gew.% Einheiten $a_1$) |
| | 20 Gew.% Einheiten $a_2$) |
| $X_5$ | 50 Gew.% Einheiten $a_1$) |
| | 50 Gew.% Einheiten $a_2$) |

In der Abbildung ist das durch diese Punkte festgelegte Fünfeck in einem Dreistoffdiagramm dargestellt.

Als besonders vorteilhaft für viele Anwendungszwecke haben sich Polyamide mit 50 - 80, insbesondere 60 - 75 Gew.% Einheiten, die sich von Terephthalsäure und Hexamethylendiamin ableiten (Einheiten $a_1$)) und 20 - 50, vorzugsweise 25 - 40 Gew.% Einheiten, die sich von ε-Caprolactam ableiten (Einheiten $a_2$)), erwiesen.

Neben den vorstehend beschriebenen Einheiten $a_1$) bis $a_3$) können die erfindungsgemäßen teilaromatischen Copolyamide noch untergeordnete Mengen, vorzugsweise nicht mehr als 15 Gew.%, insbesondere nicht mehr als 10 Gew.% an weiteren Polyamidbausteinen enthalten, wie sie von anderen Polyamiden bekannt sind. Diese Bausteine können sich von Dicarbonsäuren mit 4 - 16 Kohlenstoffatomen und aliphatischen oder cycloalphatischen Diaminen mit 4 - 16 Kohlenstoffatomen sowie von Aminocarbonsäuren bzw. entsprechenden Lactamen mit 7 - 12 Kohlenstoffatomen ableiten. Als geeignete Monomere dieser Typen seien hier nur Suberinsäure, Azelainsäure, Sebacinsäure oder Isophthalsäure als Vertreter der Dicarbonsäuren, 1,4-Butandiamin, 1,5-Pentandiamin, Piperazin, 4,4′-Diaminodicyclohexylmethan, 2,2-(4,4′-Diaminodicyclohexyl)propan oder 3,3′-Dimethyl-4,4′-Diaminodicyclohexylmethan als Vertreter der Diamine und Capryllactam, önanthlactam, Omega-Aminoundecansäure und Laurinlactam als Vertreter von Lactamen bzw. Aminocarbonsäuren genannt.

Die Schmelzpunkte der teilaromatischen Copolyamide A) liegen im Bereich von 260°C bis über 300°C, wobei dieser hohe Schmelzpunkt auch mit einer hohen Glasübergangstemperatur von in der Regel mehr als 75, insbesondere mehr als 85°C verbunden ist.

Binäre Copolyamide auf der Basis von Terephthalsäure, Hexamethylendiamin und ε-Caprolactam weisen bei Gehalten von etwa 70 Gew.% an Einheiten, die sich von Terephthalsäure und Hexamethylendiamin ableiten, Schmelzpunkte im Bereich von 300°C und eine Glasübergangstemperatur von mehr als 110°C auf.

Binäre Copolyamide auf der Basis von Terephthalsäure, Adipinsäure und Hexamethylendiamin (HMD) erreichen bereits bei niedrigeren Gehalten von etwa 55 Gew.% Einheiten aus Terephthalsäure und Hexamethylendiamin Schmelzpunkte von 300°C und mehr, wobei die Glasübergangstemperatur nicht ganz so hoch liegt wie bei binären Copolyamiden, die anstelle von Adipinsäure bzw. Adipinsäure/HMD ε-Caprolactam enthalten.

Die Herstellung der teilaromatischen Copolyamide A) kann z.B. nach dem in den EP-A 129 195 und EP-A 129 196 beschriebenen Verfahren erfolgen.

Gemäß diesem Verfahren wird eine wäßrige Lösung der Monomeren, d.h. in diesem Fall der Monomeren,

die die Einheiten $a_1$) bis $a_3$) bilden, unter erhöhtem Druck unter gleichzeitiger Verdampfung von Wasser und Bildung eines Präpolymeren auf eine Temperatur von 250 - 300°C erhitzt, anschließend werden Präpolymere und Dämpfe kontinuierlich getrennt, die Dämpfe rektifiziert und die mitgeführten Diamine zurückgeleitet. Schließlich wird das Präpolymer in eine Polykondensationszone geleitet und unter einem Überdruck von 1 - 10 bar und einer Temperatur von 250 - 300°C polykondensiert. Wesentlich ist bei dem Verfahren, daß die wäßrige Salzlösung unter einem Überdruck von 1 - 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.% beträgt.

Durch diese kurzen Verweilzeiten wird die Bildung von Triaminen weitgehend verhindert, so daß die teilaromatischen Copolyamide A) im allgemeinen Triamingehalte von vorzugsweise weniger als 0, 5 Gew.-%, insbesondere weniger als 0,3 Gew.% aufweisen. Hohe Triamingehalte können zu einer Verschlechterung der Produktqualität und zu Problemen bei der kontinuierlichen Herstellung der teilaromatischen Copolyamide führen. Als Triamin, welches solche Probleme verursachen kann, ist insbesondere das Dihexamethylentriamin zu nennen, welches sich aus dem als Monomer verwendeten Hexamethylendiamin bildet.

Die verwendeten wäßrigen Lösungen haben in der Regel einen Monomergehalt von 30 - 70 Gew.%, insbesondere von 40 - 65 Gew.%.

Die wäßrige Salzlösung wird vorteilhaft mit einer Temperatur von 50 - 100°C kontinuierlich in eine Verdampferzone geleitet, wo die wäßrige Salzlösung unter einem Überdruck von 1 - 10, vorzugsweise von 2 - 6 bar auf eine Temperatur von 250 - 330°C erhitzt wird. Es versteht sich, daß die angewandte Temperatur über dem Schmelzpunkt des jeweils herzustellenden Polyamids liegt.

Wie bereits erwähnt, ist es wesentlich, daß die Verweilzeit in der Verdampferzone maximal 60 Sekunden, vorzugsweise 10 - 55 Sekunden und insbesondere 10 - 40 Sekunden beträgt.

Der Umsatz beim Austritt aus der Verdampferzone beträgt vorteilhaft mindestens 93, vorzugsweise 95 - 98 % und der Wassergehalt liegt vorzugsweise im Bereich von 2 - 5, insbesondere 1 - 3 Gew.%.

Die Verdampferzone ist vorteilhaft als Röhrenbündel ausgebildet. Besonders bewährt haben sich Röhrenbündel, in denen der Querschnitt der einzelnen Röhren periodisch wiederkehrend rohrförmig und spaltförmig ausgebildet ist.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, daß die Menge des mit Wasserdampf freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die bei dem Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht und in der Regel eine relative Viskosität von 1,2 - 1,7 hat, wird in eine Polymerisationszone geleitet. In der Polymerisationszone wird die anfallende Schmelze bei einer Temperatur von 250 - 330°C, insbesondere 270 - 310°C, und unter einem Überdruck von 1 - 10 bar, insbesondere 2 - 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 - 30 Minuten ein. Das so erhaltene Polyamid, das in der Regel eine relative Viskosität von 1,2 - 2,3 hat, wird kontinuierlich aus der Kondensationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird vorteilhaft in fester Phase mittels überhitztem Wasserdampf bei einer Temperatur unterhalb des Schmelzpunktes, z.B. von 170 - 240°C, bis zur gewünschten Viskosität kondensiert. Vorteilhaft verwendet man hierfür den am Kopf der Kolonne anfallenden Wasserdampf.

Die relative Viskosität, gemessen in 1 % Lösung (1 g/100 ml) in 96 Gew.% $H_2SO_4$ bei 23°C, liegt nach der Festphasennachkondensation im allgemeinen im Bereich von 2,2 - 5,0, vorzugsweise von 2,3 - 4,5.

Nach einer anderen bevorzugten Arbeitsweise wird die aus der Polykondensationszone ausgetragene Polyamidschmelze in eine weitere Polykondensationszone geleitet und dort unter fortlaufender Ausbildung neuer Oberflächen bei einer Temperatur von 285 bis 310°C vorteilhaft unter vermindertem Druck, z.B. von 1 - 500 mbar, bis zur gewünschten Viskosität kondensiert. Geeignete Vorrichtungen sind als Finisher bekannt.

Ein weiteres Verfahren, welches dem vorstehend beschriebenen ähnelt, ist in der EP-A 129 196 beschrieben, worauf hier wegen weiterer Einzelheiten des Verfahrens verwiesen wird.

Als Komponente B) enthalten die erfindungsgemäßen thermoplastischen Formmassen 2 - 80, vorzugsweise 5 - 50 und insbesondere 10 - 40 Gew.%, bezogen auf das Gesamtgewicht der Komponenten A) - D), eines von A) verschiedenen teilkristallinen thermoplastischen Polyamids.

Geeignet sind teilkristalline lineare Polyamide z.B. mit einer relativen Viskosität von 2,2 bis 4,5, gemessen in 1 %iger Lösung (1 g/100 ml) in 96 gew.-%iger Schwefelsäure bei 23°C. Bevorzugt seien genannt Polyamide, die sich von Lactamen mit 7 bis 13 Ringgliedern ableiten, wie Polycaprolactam, Polycapryllactam oder Polylaurinlactam sowie Polyamide, die durch Umsetzung von Dicarbonsäuren mit Diaminen erhalten werden. Geeignete Dicarbonsäuren sind beispielsweise Alkandicarbonsäuren mit 6 bis 12, insbesondere 6 bis 10 Kohlenstoffatomen, insbesondere z.B. Adipinsäure.

Als Diamine, seien beispielsweise Alkandiamine mit 4 bis 12, insbesondere 4 bis 8 Kohlenstoffatomen, ferner m-Xylylendiamin, Bis(4-aminophenyl)- methan, Bis-(4-aminocyclohexyl)methan oder Bis(4-aminophenyl)propan-2,2 oder deren Mischungen genannt.

Es ist auch möglich und manchmal vorteilhaft, Mischungen der genannten Polyamide zu verwenden. Besondere technische Bedeutung haben Polyamid-6 (Polycaprolactam), Polyamid-66 (Polyhexamethylenadipinamid) und Polyamide, die zu mindestens 80 Gew.% aus wiederkehrenden Einheiten der Formel

$$\left[ NH-(CH_2)_4-NH-\underset{\underset{O}{\|}}{C}-(CH_2)_4-\underset{\underset{O}{\|}}{C} \right]$$

aufgebaut sind, erlangt.

Die letztgenannten Polyamide sind z.B. durch Kondensation von 1,4-Diaminobutan mit Adipinsäure unter erhöhter Temperatur erhältlich. Herstellungsverfahren für Polyamide dieser Struktur sind z.B. in den EP-A-38 094, EP-A-38 582 und EP-A-39 524 beschrieben.

Als weitere Komponente C) kann in den erfindungsgemäßen thermoplastischen Formmassen ein schlagzäh modifizierender Kautschuk (Elastomer) in Mengen von bis zu 50 Gew.%, vorzugsweise von 2 bis 40 Gew.% und insbesondere von 5 bis 30 Gew.% enthalten sein.

Nur beispielsweise seien als schlagzäh modifizierende Kautschuke Elastomere auf Ethylen-, Propylen-, Butadien- oder Acrylatbasis oder Mischungen dieser Monomeren genannt.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EP) bzw. Ethylen-Propylen-Dien-(EPDM)-Kautschuke zu nennen, die vorzugsweise ein Verhältnis von Ethylenresten zu Propylenresten im Bereich von 40:60 bis 65:35 aufweisen.

Die Mooney-Viskositäten (MLI+4/100°C) solcher unvernetzter EP bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EP-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie 1,4-Butadien, 1,4-Hexadien, 1,5-Hexadien, 2,5-Dimethyl-1,5-hexadien und 1,4-Octadien, cyclische Diene wie Cyclopentadien, Cyclohexadien, Cyclooctadien und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexadien-1,5, 5-Ethyliden-Norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

EP- bzw. EPDM-Kautschuke können auch mit reaktiven Carbonsäuren oder deren Derivaten gepfropft sein. Hier seien nur stellvertretend Acrylsäure, Methacrylsäure und deren Derivate sowie Maleinsäureanhydrid genannt.

Eine weitere Gruppe bevorzugter Kautschuke sind Copolymere des Ethylens mit Acrylsäure- und/oder Methacrylsäureestern, insbesondere solche die zusätzlich noch Epoxy-Gruppen enthalten. Diese Epoxygruppen werden vorzugsweise durch Zugabe von Epoxygruppen enthaltenden Monomeren der allgemeinen Formeln II oder III zum Monomerengemisch in den Kautschuk eingebaut

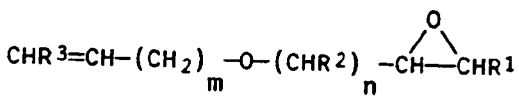 (II)

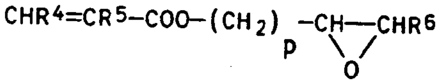 (III)

wobei $R^1$, $R^2$, $R^3$, $R^4$ und $R^5$ und $R^6$ Wasserstoff oder Alkylgruppen mit 1 bis 6 C-Atomen darstellen, m eine ganze Zahl von 0 bis 20, n eine ganze Zahl von 0 bis 10 und p eine ganze Zahl von 0 bis 5 ist.

Bevorzugt sind $R^1$, $R^2$ und $R^3$ Wasserstoff, m hat den Wert 0 oder 1 und n ist 1. Die entsprechenden Verbindungen sind Alkylglycidylether oder Vinylglycidylether.

Bevorzugte Beispiele für Verbindungen der Formel III sind Epoxygruppenenthaltende Ester der Acrylsäure und/oder Methacrylsäure, wovon wiederum Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure- und/oder Methacrylsäureesters jeweils im Bereich von 1 bis 49 Gew.%.

Besonders bevorzugt sind Copolymerisate aus

50 bis 98, insbesondere 60 bis 95 Gew.% Ethylen,

0,1 bis 40, insbesondere 2 bis 20 Gew.% Glycidylacrylat, Glycidylmethacrylat, Acrylsäure und/oder Maleinsäureanhydrid,

1 bis 45, insbesondere 10 bis 35 Gew.% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistischeCopolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Bevorzugte Elastomere (Kautschuke) D) sind weiterhin Pfropfcopolymerisate mit Butadien, Butadien/Styrol-, Butadien/Acrylnitril und Acrylestern, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk D) können auch Pfropfpolymerisate aus

25 bis 98 Gew.% eines Acrylatkautschuks mit einer Glasübergangstemperatur von unter -20°C als Pfropfgrundlage

und

2 bis 75 Gew.% eines copolymerisierbaren ethylenisch ungesättigten Monomeren, dessen Homo- bzw. Copolymerisate eine übergangstemperatur von mehr als 25°C aufweisen, als Pfropfauflage

eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide so-

wie Vinyl-$C_1$-$C_6$-Alkylether angeführt.

Die Pfropfgrundlage kann unvernetzt oder teilweise oder vollständig vernetzt sein. Die Vernetzung wird durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke C) weisen vorzugsweise eine Glasübergangstemperatur von unter -30°C, insbesondere von unter -40°C auf, was zu einer guten Schlagzähigkeit auch bei tiefen Temperaturen führt.

Es versteht sich, daß auch Mischungen der vorstehend aufgeführten schlagzäh modifizierenden Elastomeren eingesetzt werden können.

Als Komponente D) können die erfindungsgemäßen Formmassen bis zu 60, vorzugsweise von 5 bis 50 Gew.% faser- oder teilchenförmige Füllstoffe oder deren Mischungen enthalten. Als Beispiel für Füllstoffe seien Asbest, Kohlenstoff- oder Glasfasern in Form von Glasgeweben, Glasmatten oder Glasseidenrovings und Wollastonit genannt.

Neben den Komponenten A) bis D) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.%, bezogen auf das Gesamtgewicht der Komponenten A) bis D).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, Weichmacher und Flammschutzmittel.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis zu 1 Gew.%, bezogen auf das Gewicht der Formmasse, einsetzbar.

Beispiele für UV-Stabilisatoren sind verschiedene substituierte Resorcine, Salicylate, Benzotriazole und Benzophenone, die im allgemeinen in Mengen, bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearinsäurealkylester und -amide sowie Ester des Pentaerythrits mit langkettigen Fettsäuren.

Als Flammschutzmittel seien hier nur roter Phosphor und die anderen an sich für teilkristalline Polyamide bekannten Flammschutzmittel genannt.

Die erfindungsgemäßen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 280 bis 350°C.

Es ist prinzipiell auch möglich und manchmal vorteilhaft, zunächst die niedermolekularen Komponenten A) und B) abzumischen und anschließend in fester Phase nachzukondensieren.

Die erfindungsgemäßen Formmassen zeichnen sich durch ein gutes Eigenschaftsniveau, insbesondere eine gute Steifigkeit aus und eignen sich daher zur Herstellung von Formkörpern jeglicher Art, Fasern und Folien.

Beispiele

Es wurden folgende Komponenten eingesetzt:

Komponente A:

Die Herstellung erfolgte gemäß EP 129 195.

Eine wäßrige Lösung, bestehend aus 35 kg ε-Caprolactam, 55 kg Terephthalsäure, 38,5 kg Hexamethylendiamin und 128,5 kg Wasser wurde aus einem beheizten Vorratsbehälter bei ca. 80°C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 295°C hatte, bei kräftiger Umwälzung beheizt. Der Verdampfer hatte eine Länge von 3 m und einen Inhalt von 180 ml und eine wärmeübertragende Oberfläche von etwa 1300 $cm^2$. Die Verweilzeit im Verdampfer betrug 50 sec. Das aus dem Verdampfer austretende Gemisch aus Präpolymeren und Wasserdampf hatte eine Temperatur von 290°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.% und einen Gehalt an ε-Caprolactam von weniger als 0,1 Gew.%. Als Kolonnensumpf erhielt man eine wäßrige Lösung von Hexamethylendiamin, die 80 Gew.% Hexamethylendiamin und 1 bis 3 % ε-Caprolactam, jeweils bezogen auf erzeugtes Polyamid enthielt. Diese Lösung wurde über eine Pumpe wieder vor dem Eintritt in den Verdampfer der Ausgangssalzlösung zugegeben.

Nach dem Verdampfer hatte das Präpolymere eine relative Viskosität von 1,25, gemessen in 96 gew.%iger Schwefelsäure bei 20°C und wies nach der Endgruppenanalyse einen Umsatz von 93 bis 95 % auf. Der Gehalt an Bis-hexamethylentriamin betrug 0,1 bis 0,15 Gew.%, bezogen auf Polyamid.

Nach Austritt der Polymerschmelze aus dem Abscheider hatte das Polyamid eine sehr helle Eigenfarbe und einen äußerst niedrigen Gehalt an Bis-hexamethylentriamin von 0,17 % sowie eine relative Viskosität von 1,65 bis 1,80.

Das Produkt wies in etwa eine Äquivalenz von Carboxyl- und Aminoendgruppen auf.

Der Gehalt an extrahierbaren Anteilen (Extraktion mit Methanol) betrug 3,1 bis 3,3 Gew.%.

Im Austragsextruder wurde die Schmelze dann auf Normaldruck entspannt und bei einer Verweilzeit von weniger als 1 Minute praktisch nicht mehr weiter kondensiert. Das erhaltene Granulat wurde durch kontinuierliche Festphasenkondensation mit überhitztem Wasserdampf bei 195°C und einer Verweilzeit von 30 Stunden auf eine Endviskosität von $\eta$-rel = 2,50 kondensiert. Der Gehalt an extrahierbaren Anteilen betrug dann 0,2 Gew.% (Methanolextrakt).

Komponente B

B/1 Polyhexamethylenadipinsäureamid mit einer relativen Viskosität von 2,6- gemessen in 96 gew.% $H_2SO_4$ (1 g/100 ml) bei 23°C (Ultramid® A3 der BASF AG)

B/2 Poly-ε-caprolactam mit einer relativen Viskosität von 2,7 - gemessen wie bei B/1 (Ultramid® B3 der BASF AG)

B/3 Polytetramethylenadipinsäureamid mit einer relativen Viskosität von 3,8 - gemessen wie bei B/1 (Stanyl® TS 300 der DSM)

Die Komponenten A und B wurden auf einem Doppelschneckenextruder bei einer Temperatur von 320 aufgeschmolzen, extrudiert und granuliert. Aus dem Granulat wurde im Spritzguß Formkörper zur Bestimmung des Elastizitätsmoduls (nach DIN 53 452) und der Streckspannung nach DIN 53 455 hergestellt.

Die Zusammensetzung der Abmischungen und die Ergebnisse der Messungen sind der Tabelle zu entnehmen.

Tabelle (alle %-Angaben in Gew.%)

| Beispiel | 1V | 2V | 3V | 4V | 5 | 6 | 7 | 8 |
|---|---|---|---|---|---|---|---|---|
| Komponente A (Gew.%) | 100 | - | - | - | 95 | 80 | 90 | 90 |
| Komponente B (Gew.%) | - | 100 B/1 | 100 B/2 | 100 B/3 | 5 B/1 | 20 B/1 | 10 B/2 | 10 B/3 |
| Elastizitäts-modul [N/mm2] | 2940 | 3200 | 3000 | 3050 | 3350 | 3300 | 3500 | 3460 |
| Streckspannung [N/mm2] | 85 | 80 | 80 | 80 | 110 | 105 | 108 | 100 |

Die Ergebnisse zeigen, daß der Elastizitätsmodul und die Streckspannung der erfindungsgemäßen Mischungen höher liegen als die Werte für die Einzelkomponenten.

**Patentansprüche**

1. Thermoplastische Formmassen, enthaltend als wesentliche Komponenten

A) 20 - 98 Gew.% eines teilaromatischen Copolyamids, aufgebaut aus

$a_1$) 40 - 90 Gew.% Einheiten, die sich von Terephthalsäure und Hexamethylendiamin ableiten, wobei nicht mehr als 10 Gew.% der Terephthalsäure durch andere aromatische Dicarbonsäuren ersetzt werden können,

$a_2$) 0 - 50 Gew.% Einheiten, die sich von ε-Caprolactam ableiten, und

$a_3$) 0 - 60 Gew.% Einheiten, die sich von Adipinsäure und Hexamethylendiamin ableiten,

wobei die Komponente $a_2$) und/oder $a_3$) insgesamt mindestens 10 Gew.% der Gesamteinheiten ausmachen, und die Komponente A) nicht mehr als 15 Gew.% weiterer Polyamidbausteine enthält,

B) 2 - 80 Gew.% eines von A) verschiedenen teilkristallinen thermoplastischen Polyamids,

sowie darüber hinaus

C) 0 - 50 Gew.% eines schlagzäh modifizierenden Elastomeren

D) 0 - 60 Gew.% faser- oder teilchenförmige Füllstoffe oder deren Mischungen.

2. Thermoplastische Formmassen nach Anspruch 1, dadurch gekennzeichnet, daß die teilaromatischen Copolyamide A) einen Triamingehalt von weniger als 0,5 Gew.% aufweisen.

3. Thermoplastische Formmassen nach einem der Ansprüche 1 und 2, dadurch gekennzeichnet, daß die Zusammensetzung der teilaromatischen Copolyamide A im Dreistoffdiagramm innerhalb des durch die Eckpunkte $X_1$ bis $X_5$ definierten Fünfecks liegt:

$X_1$ 40 Gew.% Einheiten $a_1$)
60 Gew.% Einheiten $a_3$)

$X_2$ 60 Gew.% Einheiten $a_1$)
40 Gew.% Einheiten $a_3$)

Zeichn.

$X_3$ 80 Gew.% Einheiten $a_1$
5 Gew.% Einheiten $a_2$)
15 Gew.% Einheiten $a_3$)

$X_4$ 80 Gew.% Einheiten $a_1$)
20 Gew.% Einheiten $a_2$)

$X_5$ 50 Gew.% Einheiten $a_1$)
50 Gew.% Einheiten $a_2$)

4. Thermoplastische Formmassen nach einem der Ansprüche 1 bis 3, dadurch gekennzeichnet, daß die teilaromatischen Copolyamide A)

$a_1$) 50 - 80 Gew.% Einheiten, die sich von Terephthalsäure und Hexamethylendiamin ableiten, und

$a_2$) 20- 50 Gew.% Einheiten, die sich von ε-Caprolactam ableiten,
enthalten.

5. Thermoplastische Formmassen nach Anspruch 4, dadurch gekennzeichnet, daß die teilaromatischen Copolyamide A)

$a_1$) 60 - 75 Gew.% Einheiten, die sich von Terephthalsäure und Hexamethylendiamin ableiten, und
$a_2$) 25 - 40 Gew.% Einheiten, die sich von ε-Caprolactam ableiten, enthalten.

6. Thermoplastische Formmassen nach einem der Ansprüche 1 - 5, dadurch gekennzeichnet, daß das Polyamid B) Poly-ε-caprolactam, Polytetramethylenadipinsäureamid und/oder Polyhexamethylenadipinsäureamid ist.

7. Verwendung der thermoplastischen Formmassen gemäß den Ansprüchen 1 bis 6 zur Herstellung von Folien, Fasern und Formkörpern.

8. Formkörper, erhältlich aus thermoplastischen Formmassen gemäß den Ansprüchen 1 bis 6.

## Claims

1. A thermoplastic molding material containing, as essential components,

A) 20-98% by weight of a partly aromatic amide copolymer consisting of

$a_1$) 40-90% by weight of units derived from terephthalic acid and hexamethylenediamine, it not being possible for more than 10% by weight of terephthalic acid to be replaced by other aromatic dicarboxylic acids,
$a_2$) 0-50% by weight of units derived from ε-caprolactam and
$a_3$) 0-60% by weight of units derived from adipic acid and hexamethylenediamine,

components $a_2$) and/or $a_3$) accounting altogether for not less than 10% by weight of the total number of units, and component A) containing not more than 15% by weight of other polyamide building blocks,

B) 2-80% by weight of a partly crystalline thermoplastic polyamide which differs from A),
and furthermore
C) 0-50% by weight of an elastomeric impact modifier and
D) 0-60% by weight of fibrous or particulate fillers or a mixture of these.

2. A thermoplastic molding material as claimed in claim 1, wherein the partly aromatic amide copolymer A) has a triamine content of less than 0.5% by weight.

3. A thermoplastic molding material as claimed in claim 1 or 2, wherein the composition of the partly aromatic amide copolymer A in the ternary diagram is within the pentagon defined by the apices $X_1$ to $X_5$:

$X_1$ 40% by weight of units $a_1$)
60% by weight of units $a_3$)
$X_2$ 60% by weight of units $a_1$)
40% by weight of units $a_3$)
$X_3$ 80% by weight of units $a_1$)
5% by weight of units $a_2$)
15% by weight of units $a_3$)
$X_4$ 80% by weight of units $a_1$)
20% by weight of units $a_2$)
$X_5$ 50% by weight of units $a_1$)
50% by weight of units $a_2$)

4. A thermoplastic molding material as claimed in any of claims 1 to 3, wherein the partly aromatic amide copolymer A) contains

$a_1$) 50-80% by weight of units derived from terephthalic acid and hexamethylenediamine and
$a_2$) 20-50% by weight of units derived from ε-caprolactam.

5. A thermoplastic molding material as claimed in claim 4, wherein the partly aromatic amide copolymer A) contains

$a_1$) 60-75% by weight of units derived from terephthalic acid and hexamethylenediamine and
$a_2$) 25-40% by weight of units derived from ε-caprolactam.

6. A thermoplastic molding material as claimed in any of claims 1 to 5, wherein the polyamide B) is poly-ε-caprolactam, polytetramethyleneadipamide and/or polyhexamethyleneadipamide.

7. Use of a thermoplastic molding material as claimed in any of claims 1 to 6 for producing films, fibers and moldings.

8. A molding obtainable from a thermoplastic molding material as claimed in any of claims 1 to 6.

**Revendications**

1. Masses à mouler thermoplastiques contenant, en tant que composants essentiels,

A) de 20 à 98% en poids d'un copolyamide partiellement aromatique, se composant de

$a_1$) 40-90% en poids de motifs qui dérivent d'acide téréphtalique et d'hexaméthylènediamine, l'acide téréphtalique pouvant être remplacé, dans une proportion ne dépassant pas 10% en poids, par d'autres acides dicarboxyliques aromatiques,

$a_2$) 0-50% en poids de motifs qui dérivent d'ε-caprolactame, et

$a_3$) 0-60% en poids de motifs qui dérivent d'acide adipique et d'hexaméthylènediamine,

les composants $a_2$) et/ou $a_3$) constituant au total au moins 10% en poids de la totalité des motifs et le composant A) ne contenant pas plus de 15% en poids d'autres éléments structuraux de polyamide,

B) de 2 à 80% en poids d'un polyamide thermoplastique partiellement cristallin différent de A)

et, en outre,

C) de 0 à 50% en poids d'un élastomère modificateur dans le sens de la résilience,

D) de 0 à 60% en poids de charges en fibres ou en particules ou de mélanges de celles-ci.

2. Masse à mouler thermoplastiques selon la revendication 1, caractérisées en ce que les copolyamides partiellement aromatiques A) présentent une teneur en triamines de moins de 0,5% en poids.

3. Masses à mouler thermoplastiques selon la revendication 1 ou 2, caractérisées en ce que la composition des copolyamides partiellement aromatique A) se situe, dans le diagramme ternaire, à l'intérieur du pentagone défini par les sommets $X_1$ à $X_5$:

$X_1$ 40% en poids de motifs $a_1$)
60% en poids de motifs $a_3$),

$X_2$ 60% en poids de motifs $a_1$)
40% en poids de motifs $a_3$),

$X_3$ 80% en poids de motifs $a_1$)
5% en poids de motifs $a_2$)
15% en poids de motifs $a_3$),

$X_4$ 80% en poids de motifs $a_1$)
20% en poids de motifs $a_2$),

$X_5$ 50% en poids de motifs $a_1$)
50% en poids de motifs $a_2$).

4. Masses à mouler thermoplastiques selon l'une quelconque des revendications 1 à 3, caractérisées en ce que les copolyamides partiellement aromatique A) contiennent

$a_1$) 50-80% en poids de motifs qui dérivent d'acide téréphtalique et d'hexaméthylènediamine, et

$a_2$) 20-50% en poids de motifs qui dérivent d'ε-caprolactame.

5. Masses à mouler thermoplastiques selon la revendication 4, caractérisée en ce que les copolyamides partiellement aromatiques A) contiennent

$a_1$) 60-75% en poids de motifs qui dérivent d'acide téréphtalique et d'hexaméthylènediamine, et

$a_2$) 25-40% en poids de motifs qui dérivent d'ε-caprolactame.

6. Masses à mouler thermoplastiques selon l'une quelconque des revendications 1 à 5, caractérisées en ce que le polyamide B) est un poly-ε-caprolactame, un poly(tétraméthylèneadipamide) et/ou un poly(hexaméthylèneadipamide).

7. Utilisation des masses à mouler thermoplastiques selon l'une quelconque des revendications 1 à 6 pour la fabrication de feuilles, de fibres et de corps moulés.

8. Corps moulés, obtenus à partir de masses à mouler thermoplastiques selon l'une quelconque des revendications 1 à 6.

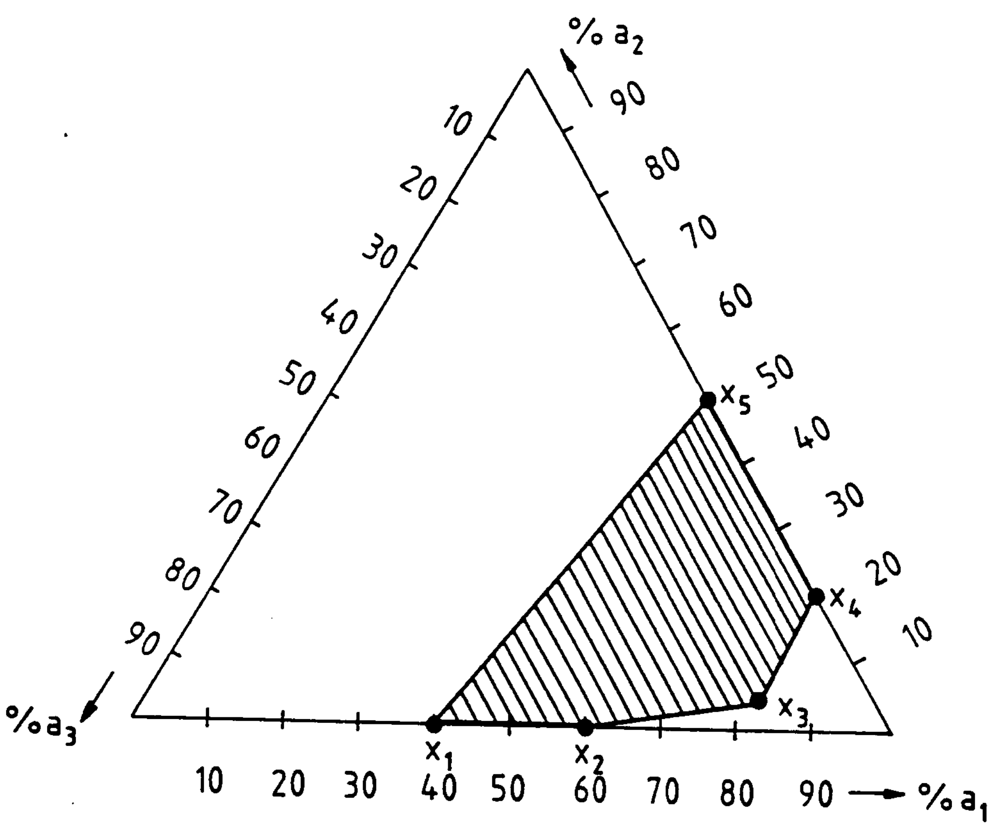

% a2
% a3
% a1
x1
x2
x3
x4
x5
10 20 30 40 50 60 70 80 90
90 80 70 60 50 40 30 20 10
10 20 30 40 50 60 70 80 90